# EUROPÄISCHE PATENTSCHRIFT

(11) **EP 1 183 303 B1**
(45) Veröffentlichungstag und Bekanntmachung des Hinweises auf die Patenterteilung: **12.01.2005**
(21) Anmeldenummer: 00929483.6
(22) Anmeldetag: 03.05.2000
(51) Int. Cl.: C08J 9/18

(54) **BIOLOGISCH ABBAUBARE POLYESTERSCHAUMSTOFFPARTIKEL**
BIODEGRADABLE POLYESTER FOAMED MATERIAL PARTICLES
PARTICULES DE MOUSSE POLYESTER BIODEGRADABLES

(30) Priorität: 10.05.1999 DE 19921385
(43) Veröffentlichungstag der Anmeldung: 06.03.2002
(73) Patentinhaber: BASF AKTIENGESELLSCHAFT, 67056 Ludwigshafen (DE)
(72) Erfinder: BRAUN, Frank, D-67063 Ludwigshafen (DE); GLÜCK, Guiscard, D-55129 Mainz (DE); HAHN, Klaus, D-67281 Kirchheim (DE); WITT, Uwe, D-67112 Mutterstadt (DE); DE GRAVE, Isidoor, D-67157 Wachenheim (DE)
(86) Internationale Anmeldenummer: PCT/EP2000/003970
(87) Internationale Veröffentlichungsnummer: WO 2000/068303

(56) Entgegenhaltungen:
- EP-A- 0 569 148
- WO-A-96/07687
- PATENT ABSTRACTS OF JAPAN vol. 017, no. 582 (C-1123), 22. Oktober 1993 (1993-10-22) & JP 05 170965 A (MITSUI TOATSU CHEM INC), 9. Juli 1993 (1993-07-09)

## Beschreibung

Die Erfindung betrifft expandierbare bzw. expandierte Polymerpartikel auf Basis von biologisch abbaubaren, gesättigten Polyestern.

Es ist bekannt, daß einige natürlich vorkommende Materialien, z.B. Cellulose und Stärke, bioabbaubar sind, d.h. durch Mikroorganismen, insbesondere bei der Kompostierung zu niedermolekularen Substanzen zersetzt werden. Auch einige synthetische Polymere sind bioabbaubar, z.B. Polyester. Rein aliphatische Polyester sind zwar gut bioabbaubar, sie sind aber aufgrund ihres niedrigen mechanischen und thermischen Eigenschaftsniveaus für die praktische Anwendung kaum geeignet. Aromatische Polyester zeigen dagegen gute mechanische Eigenschaften, sie sind aber nicht biologisch abbaubar.

Aus WO 96/07687 ist bekannt, daß Copolyester, die als Monomerkomponenten aliphatische Diole einerseits und sowohl aliphatische als auch aromatische Dicarbonsäuren andererseits enthalten, gleichzeitig gute mechanische und thermische Eigenschaften aufweisen und biologisch abbaubar sind. In der Druckschrift sind auch geschäumte Formteile erwähnt, über deren Herstellung ist aber nichts ausgesagt.

In WO 96/15173 sind ebenfalls bioabbaubare Copolyester aus aliphatischen Diolen und einer Mischung aus Adipinsäure und Terephthalsäure beschrieben, die durch Einbau weiterer Veresterungskomponenten modifiziert sind. Aus diesen Polyestern können Schaumstoffe durch Vermischen einer Polymerschmelze mit Treibmitteln und Schaumextrusion der Mischung hergestellt werden.

WO 97/43329 betrifft bioabbaubare, verzweigte Copolyester mit erhöhter Schmelzviskosität, die polyfunktionelle Polyole bzw. Polycarbonsäuren einkondensiert enthalten. Die Copolyester können wieder nach dem Schmelzextrusionsverfahren zu Schaumstoffen verarbeitet werden.

Schließlich beschreibt auch die WO 97/44388 Schaumstoffe aus feuchtigkeitsresistenten, bioabbaubaren Mischungen von natürlichen Polymeren, z.B. Stärke, mit hydroxyfunktionellen Polyestern. Auch diese bioabbaubaren Materialien wurden nach dem Schaumextrusionsverfahren geschäumt.

Das Schaumextrusionsverfahren hat den Nachteil, daß dabei nur Schaumstoff-Formkörper einfacher Gestalt, z.B. Platten oder Profile, hergestellt werden können. Schaumstoff-Formkörper beliebiger Gestalt können bekanntlich durch Aufschäumen und Versintern von expandierbaren bzw. expandierten Polymerpartikeln, z.B. auf Basis von Polystyrol bzw. Polyolefinen hergestellt werden.

Der Erfindung lag daher die Aufgabe zugrunde, expandierte bzw. expandierbare Partikel auf Basis von bioabbaubaren Polyestern bereitzustellen. Diese Aufgabe wird erfindungsgemäß durch die Verfahren nach den Ansprüchen 1 bzw. 2 gelöst.

In der EP-A 601390 werden abbaubare Formkörper aus geschäumten Polylactiden beschrieben, die durch Verschäumen einer Mischung aus treibmittelhaltigem, amorphem Polylactid-Granulat und feinteiligem, nichttreibmittelhaltigem Polylactid hergestellt werden. Das treibmittelhaltige Polylactid-Granulat kann erhalten werden durch Suspension von Polylactid-Granulat in Wasser, Einpressen von Treibmitteln, z.B. Pentan, bei Drücken von bis zu 100 bar über einen Zeitraum von bis zu 10 h bei Temperaturen unterhalb von 50°C. Dies ist eine recht aufwendige und zeitraubende Arbeitsweise. Formkörper aus Polylactiden sind nicht direkt bioabbaubar. Sie müssen erst bei erhöhten Temperaturen zu Milchsäure hydrolysiert werden, die dann biologisch weiter abgebaut werden.

Für das erfindungsgemäße Verfahren geeignete Polyester sind in den Ansprüchen 3 und 4 beschrieben, sowie in den zitierten Druckschriften WO 96/07687, WO 96/15173, WO 97/43329 und WO 97/44388.

Zu den besonders bevorzugten teilaromatischen Polyestern zählen Polyester, die als wesentliche Komponenten enthalten:
a) eine Säurekomponente aus
   a1) 30 bis 95 mol-% mindestens einer aliphatischen oder cycloaliphatischen Dicarbonsäure oder deren esterbildenden Derivate oder Mischungen davon,
   a2) 5 bis 70 mol-% mindestens einer aromatischen Dicarbonsäure oder deren esterbildenden Derivate und
   a3) 0 bis 5 mol-% einer sulfonatgruppenhaltigen Verbindung,
b) einer Diolkomponente aus mindestens einem C₂- bis C₁₂-Alkandiol oder einem C₅- bis C₁₀-Cycloalkandiol oder Mischungen davon,
   und gewünschtenfalls darüber hinaus eine oder mehrere Komponenten ausgewählt aus
c) einer Komponente ausgewählt aus
   c1) mindestens einer Etherfunktionen enthaltenden Dihydroxyverbindung der Formel I

      HO-[(CH₂)ₙ-O]ₘ-H (I)

      in der n für 2,3 oder 4 und m für eine ganze Zahl von 2 bis 250 stehen
   c2) mindestens einer Hydroxycarbonsäure oder Formel IIa oder IIb

      HO― [― C(O) ― T― T―] pH (IIa)

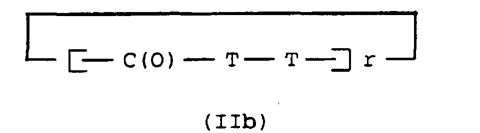

      in der p eine ganze Zahl von 1 bis 1500 und r eine ganze Zahl von. 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
   c3) mindestens einem Amino-C₂- bis C₁₂-alkanol oder mindestens einem Amino-C₅- bis C₁₀-cycloalkanol oder Mischungen davon
   c4) mindestens einem Diamino-C₁- bis C₈-alkan
   C5) mindestens einem 2,2'-Bisoxazolins der allgemeinen Formel III 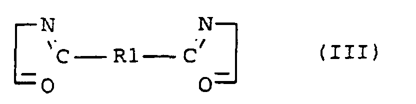 wobei R¹ eine Einfachbindung, eine (CH₂)₂-Alkylengruppe, mit z = 2, 3 oder 4, oder eine Phenylengruppe bedeutet
   c6) mindestens einer Aminocarbonsäure ausgewählt aus der Gruppe, bestehend aus den natürlichen Aminosäuren, Polyamiden mit einem Molekulargewicht von höchstens 18000 g/mol, erhältlich durch Polykondensation einer Dicarbonsäure mit 4 bis 6 C-Atomen und einem Diamin mit 4 bis 10 C-Atomen, Verbindungen der Formeln IVa und IVb

      HO―[―C(O)―T―N(H)―]sH (IVa)

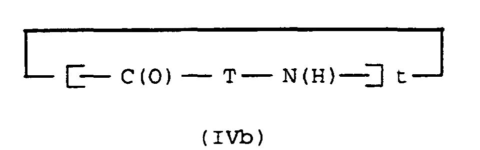

      in der s eine ganze Zahl von 1 bis 1500 und t eine ganze Zahl von 1 bis 4 bedeuten, und T für einen Rest steht, der ausgewählt ist aus der Gruppe bestehend aus Phenylen, - (CH₂)ₙ-, wobei n eine ganze Zahl von 1 bis 12 bedeutet, -CR²H- und -CR²HCH₂-, wobei R² für Methyl oder Ethyl steht,
      und Polvoxazolinen mit der wiederkehrenden Einheit V 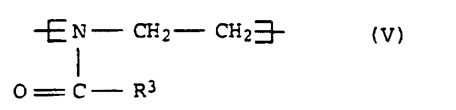 in der R³ für Wasserstoff, C₁-C₆-Alkyl, C₅-C₈-Cycloalkyl, unsubstituierten oder mit C₁-C₄-Alkylgruppen bis zu dreifach substituiertes Phenyl oder für Tetrahydrofuryl steht,
      oder Mischungen aus c1 bis c6
   und
d) einer Komponente ausgewählt aus
   d1) mindestens einer Verbindung mit mindestens drei zur Esterbildung befähigten Gruppen,
   d2) mindestens eines Isocyanates
   d3) mindestens eines Divinylethers
   oder Mischungen aus d1) bis d3).

Die Säurekomponente a der teilaromatischen Polyester enthält von 30 bis 70, insbesondere von 40 bis 60 mol-% a1 und von 30 bis 70, insbesondere von 40 bis 60 mol-% a2.

Als aliphatische bzw. cycloaliphatische Säuren und die entsprechenden Derivate a1 kommen die oben genannten in Betracht. Besonders bevorzugt werden Adipinsäure oder Sebacinsäure, deren jeweiligen esterbildenden Derivate oder Mischungen davon eingesetzt. Besonders bevorzugt sind Adipinsäure oder deren esterbildende Derivate, wie deren Alkylester oder deren Mischungen.

Als aromatische Dicarbonsäure a2 sind im allgemeinen solche mit 8 bis 12 Kohlenstoffatomen und vorzugsweise solche mit 8 Kohlenstoffatomen zu nennen. Beispielhaft erwähnt seien Terephthalsäure, Isophthalsäure, 2,6-Naphthoesäure und 1,5-Naphthoesäure sowie esterbildende Derivate davon. Dabei sind insbesondere die Di-C₁-C₆-Alkylester, z.B. Dimethyl-, Diethyl-, Di-n-propyl-, Diiso-propyl, Di-n-butyl-, Di-iso-butyl, Di-t-butyl, Di-n-pentyl, Di-iso-pentyl oder Di-n-hexylester zu nennen. Die Anhydride der Dicarbonsäuren a2 sind ebenso geeignete esterbildende Derivate.

Prinzipiell können jedoch auch aromatische Dicarbonsäuren a2 mit einer größeren Anzahl an Kohlenstoffatomen, beispielsweise bis zu 20 Kohlenstoffatomen, eingesetzt werden.

Die aromatischen Dicarbonsäuren oder deren esterbildende Derivate a2 können einzeln oder als Gemisch aus zwei oder mehr davon eingesetzt werden. Besonders bevorzugt wird Terephthalsäure oder deren esterbildende Derivate wie Dimethylterephthalat, verwendet.

Die Polyester schmelzen vorzugsweise in einem Bereich zwischen 70° und 150°C, insbesondere zwischen 80° und 130°C. Die hier betrachteten gesättigten, teilaromatischen Polyester haben keine exakt definierten Schmelzpunkte, sondern weisen einen Schmelzbereich auf. Innerhalb dieses Schmelzbereichs sollte zweckmäßigerweise die erfindungsgemäße Imprägnierung mit dem Treibmittel vorgenommen werden.

Die teilaromatischen Polyester sind charakterisiert durch ein Molekulargewicht (Mn) im Bereich von 5000 bis 100000, insbesondere im Bereich von 10000 bis 40000 g/mol, mit einer Viskositätszahl im Bereich von 50 bis 400, insbesondere im Bereich von 100 bis 300 g/ml (gemessen in o-Dichlorobenzol/Phenol; Gew.-Verhältnis 50/50, bei einer Konzentration von 0,5 Gew.-% Polymer und einer Temperatur von 25°C).

Die biologisch abbaubaren Polyester können mit bis zu 200 %, bezogen auf ihr Gewicht, an anderen biologisch abbaubaren Polymeren abgemischt werden. Beispielsweise seien genannt: Cellulose und Cellulosederivate, Stärke und Stärkederivate, Polyhydroxyalkanoate, wie Polyhydroxybutyrat und Polylactide.

Die biologisch abbaubaren Polymeren können Zusatzstoffe enthalten, die man während des Polymerisationsvorganges nachträglich, beispielsweise in eine Schmelze der biologisch abbaubaren Polymeren einarbeiten kann. Beispielhaft werden Stabilisatoren, Neutralisationsmittel, Gleit- und Trennmittel, Antiblockmittel, Nukleierungsmittel, nicht fluoreszierende Farbstoffe oder Füllstoffe genannt.

Bezogen auf die biologisch abbaubaren Polymere kann man von 0 bis 80 Gew.-% Zusatzstoffe zusetzen. Geeignete Zusatzstoffe sind beispielsweise Ruß, Ligninpulver, Cellulosefasern, Naturfasern wie Sisal und Hanf, Eisenoxide, Tonmineralien, Erze, Calciumcarbonat, Calciumsulfat, Bariumsulfat und Titandioxid, Stabilisatoren wie Tocopherol (Vitamin E), organische Phosphorverbindungen, Mono-, Di- und Polyphenole, Hydrochinone, Diarylamine, Thioether. Als Nukleierungsmittel kommt z.B. Talkum, Ruß oder Graphit in Betracht. Gleit- und Formtrennmittel auf Basis von Kohlenwasserstoffen, Fettalkoholen, höheren Carbonsäuren, Metallsalzen höherer Carbonsäuren wie Calcium- oder Zinkstearat, oder Montanwachsen konnten auch als Zusatzstoffe enthalten sein. Solche Stabilisatoren etc. sind in Kunststoff-Handbuch, Bd. 3/1, Carl-Hanser Verlag, München, 1992, S. 24 bis 28 ausführlich beschrieben.

Bei der Herstellung der expandierten bzw. expandierbaren PolymerPartikel geht man von Polyestergranulat aus, welches vorzugsweise mittlere Durchmesser von 0,2 bis 10, insbesondere 0,5 bis 5 mm aufweist. In einem Rührreaktor werden 100 Gew.-Teile dieses Granulats in 100 bis 500 Gew.-Teilen Suspensionsmedium dispergiert.

Die Dichten des Polymergranulats und des Suspensionsmediums sollten in etwa aneinander angepaßt werden, damit eine gute Verteilung des Granulats in der gerührten Flüssigkeit gewährleistet ist. Da die bevorzugten Polyester im allgemeinen eine Dichte von etwa 1,25 g/cm³ aufweisen, sollte die Dichte der Flüssigkeit oberhalb von 1,0 g/cm³, vorzugsweise zwischen 1,05 und 1,3 g/cm³ und insbesondere zwischen 1,1 und 1,25 g/cm³ liegen. Als Flüssigkeiten kommen z.B. Ethylenglykol und Glyzerin in Frage sowie Mischungen davon mit Wasser. Eine andere Möglichkeit der Anpassung der Dichten besteht darin, daß man als Flüssigkeit Wasser verwendet und leicht angeschäumtes Polymergranulat einsetzt. Letzteres kann durch Vermischen einer Schmelze des Polymeren mit einem chemisehen Treibmittel, z.B. Azodicarbonamid oder Bicarbonat/Zitronensäure, Extrudieren der Schmelze und Granulieren hergestellt werden.

Die Dispersion kann übliche Suspensionsstabilisatoren in Mengen von 0,01 bis 5 Gew.-%, bezogen auf das Polymergranulat enthalten, beispielsweise wasserunlösliche anorganische Verbindungen, wie Metallcarbonate, -phosphate oder -oxide, die zusammen mit oberflächenaktiven Substanzen, wie z.B. Sulfonaten oder Ethoxylaten, eingesetzt werden. Falls die Dichte des Polymergranulats höher ist als die Dichte des Suspensionsmediums, kann auf Suspensionsstabilisatoren verzichtet werden.

Als Treibmittel können entweder organische Flüssigkeiten oder anorganische Gase oder Gemische davon eingesetzt werden. Als Flüssigkeiten kommen halogenierte Kohlenwasserstoffe in Frage, bevorzugt sind jedoch gesättigte, aliphatische Kohlenwasserstoffe, insbesondere solche mit 3 bis 8 Kohlenstoffatomen. Besonders bevorzugt ist n-Butan. Geeignete anorganische Gase sind Stickstoff, Luft, Ammoniak und Kohlendioxid. Auch Ethanol ist geeignet.

Das Treibmittel wird in Mengen von vorzugsweise 1 bis 50 Gew.-Teilen, insbesondere 3 bis 30 Gew.-Teilen, bezogen auf 100 Gew.-Teile Polymer, eingesetzt. Die Treibmittelzugabe kann dabei vor oder während des Aufheizens des Reaktorinhalts erfolgen.

Beim Imprägnieren sollte die Temperatur oberhalb der Erweichungstemperatur des Polymeren liegen. Sie kann 40°C unter, bis 40°C über der Schmelztemperatur (Kristallitschmelzpunkt nach DSC) liegen, bevorzugt sollte sie jedoch unterhalb der Schmelztemperatur liegen.

Je nach Menge und Art des Treibmittels sowie nach der Höhe der Temperatur stellt sich im Reaktor ein Druck ein, der im allgemeinen höher als 2 bar ist und 50 bar nicht übersteigt.

Die Imprägnierung ist im allgemeinen nach 30 bis 300 min beendet.

Bei der Herstellung von expandierten Polymerpartikeln wird die Dispersion bei erhöhter Temperatur, zweckmäßigerweise bei der Imprägniertemperatur oder etwas darunter entspannt.

Dabei expandiert das mit Treibmittel imprägnierte Granulat, und es werden Schaumpartikel mit einem Durchmesser zwischen 1 und 20 mm erhalten, die vom Suspensionsmedium abgetrennt, gewaschen und getrocknet werden. Ihre Schüttdichte kann je nach Imprägnierbedingungen im Bereich zwischen 10 und 300 g/l liegen.

Expandierbare Polymerpartikel werden dann erhalten, wenn man die Dispersion nach dem Imprägnieren, aber vor dem Entspannen stark abkühlt, zweckmäßigerweise auf Raumtemperatur. Es werden dann treibmittelhaltige, nicht aufgeschäumte Polymerpartikel erhalten, die einfacher zu lagern und zu transportieren sind als Schaumpartikel. Sie können nach üblichen Methoden, z.B. mit Wasserdampf oder Heißluft zu Schaumpartikeln expandiert werden.

Die erfindungsgemäßen Schaumpartikel können wie üblich in geschlossenen Formen mit Wasserdampf oder Heißluft zu Schaumstoff-Formteilen beliebiger Gestalt weiter geschäumt und versintert werden.

Schaumstoff-Formteile aus den biologisch abbaubaren Schaumpartikeln können als Einweggeschirr, Verpackungstabletts, Schalen und Becher verwendet werden. Nach Zerkleinerung können sie kompostiert und dabei abgebaut werden.

Die in den Beispielen genannten Teile und Prozente beziehen sich auf das Gewicht.

### Beispiel 1

In einem geschlossenen Rührreaktor werden 60 Teile eines Polyesters auf Basis Butandiol/Terephthalsäure/Adipinsäure (Molverhältnis 100:50:50) in 160 Teilen Ethylenglykol dispergiert. Nach Zugabe von 18 Teilen Butan und 5 bar Stickstoff wird der Reaktor auf ca. 110°C aufgeheizt. Dabei steigt der Druck auf ca. 25 bar an. Anschließend wird der Inhalt des Reaktors in einen Zwischenbehälter entspannt. Nach Trocknung haben die erhaltenen Schaumpartikel eine Schüttdichte von 60 g/l.

### Beispiel 2

In einem geschlossenen Rührreaktor werden 60 Teile eines Polyesters auf Basis Butandiol/Terephthalsäure/Adipinsäure (Molverhältnis 100:50:50) in 160 Teilen Ethylenglykol dispergiert. Nach Zugabe von 20 Teilen Butan und 5 bar Stickstoff wird der Reaktor auf ca. 115°C aufgeheizt. Anschließend wird der Reaktorinhalt auf Raumtemperatur abgekühlt. Nach Trocknung werden nicht aufgeschäumte, treibmittelhaltige Partikel erhalten. Diese können mit Wasserdampf auf Schüttdichten unter 100 g/l expandiert werden.

## Patentansprüche

1. Verfahren zur Herstellung von expandierten Polymerpartikeln auf Basis von bioabbaubaren, gesättigten Polyestern aus mindestens einem Diol und mindestens einer aliphatischen und einer aromatischen Dicarbonsäure, sowie gegebenenfalls weiteren Veresterungskomponenten, **gekennzeichnet durch** folgende Verfahrensstufen:
A. Polymergranulat wird in einer Flüssigkeit dispergiert,
B. ein flüchtiges Treibmittel wird unter Druck in die Dispersion eingepreßt und bei erhöhter Temperatur in dem Granulat imprägniert,
C. die Dispersion wird bei erhöhter Temperatur entspannt, wobei das treibmittelhaltige Granulat aufschäumt,
D. das Granulat wird von der Flüssigkeit abgetrennt.

2. Verfahren zur Herstellung von expandierbaren Polymerpartikeln auf Basis von bioabbaubaren, gesättigten Polyestern aus mindestens einem Diol und mindestens einer aliphatischen und einer aromatischen Dicarbonsäure, sowie gegebenenfalls weiteren Veresterungskomponenten, **gekennzeichnet durch** folgende Verfahrensstufen:
A. Polymergranulat wird in einer Flüssigkeit dispergiert,
B. ein flüchtiges Treibmittel wird unter Druck in die Dispersion eingepreßt und bei erhöhter Temperatur in dem Granulat imprägniert,
C. die Dispersion wird auf Raumtemperatur abgekühlt und dann entspannt, wobei das treibmittelhaltige Granulat nicht aufschäumt,
D. das Granulat wird von der Flüssigkeit abgetrennt.

3. Verfahren nach Anspruch 1 oder 2, **dadurch gekennzeichnet, daß** der Polyester ein Kondensationsprodukt ist aus
a) einer Säurekomponente aus
a1) 30 bis 70 mol-% mindestens einer aliphatischen oder cycloaliphatischen C₂-C₂₀-Dicarbonsäure oder deren esterbildenden Derivate und
a2) 30 bis 70 mol-% mindestens einer aromatischen Dicarbonsäure oder deren esterbildenden Derivate und
b) einer Diolkomponente aus mindestens einem C₂- bis C₁₂-Alkandiol oder einem C₅- bis C₁₀-Cycloalkandiol,
und im Bereich zwischen 70 und 150°C schmilzt.

4. Verfahren nach Anspruch 1 oder 2, **dadurch gekennzeichnet, daß** die gesättigte Polyester mit bis zu 200 %, bezogen auf ihr Gewicht, an anderen biologisch abbaubaren Polymeren, vorzugsweise natürlichen Polymeren, abgemischt sein können.

5. Verfahren nach Anspruch 1 oder 2, **dadurch gekennzeichnet, daß** der Polyester durch Einbau von drei- oder mehrfunktionellen Komponenten verzweigt und/oder durch Einbau von Diisocyanaten kettenverlängert und/oder mit einer Hydroxy-Carbonsäure modifiziert ist.

6. Verfahren nach Anspruch 1 oder 2, **dadurch gekennzeichnet, daß** das eingesetzte Polymergranulat ungeschäumt ist und die Flüssigkeit eine Dichte von 1,05 bis 1,3 g/cm³ aufweist.

7. Verfahren nach Anspruch 5, **dadurch gekennzeichnet, daß** die Flüssigkeit Ethylenglykol, Glycerin oder eine Mischung davon mit Wasser ist.

8. Verfahren nach Anspruch 1 oder 2, **dadurch gekennzeichnet, daß** die Flüssigkeit Wasser ist und das Granulat leicht angeschäumt ist und eine Dichte von 1,0 g/cm³ oder weniger aufweist.

9. Verfahren nach Anspruch 1 oder 2, **dadurch gekennzeichnet, daß** das flüchtige Treibmittel ein C₃ - C₈-Kohlenwasserstoff, Ethanol, CO₂, NH₃, Luft, N₂ oder Mischungen davon ist.

10. Verfahren nach Anspruch 1 oder 2, **dadurch gekennzeichnet, daß** in Stufe B die Imprägnierung bei einem Druck von 2 bis 50 bar und bei einer Temperatur durchgeführt wird, die höchstens 40°C unterhalb und höchstens 40°C oberhalb des Kristallitschmelzpunktes (DSC-Maximum) des Polymeren liegt.

11. Expandierbare Polymerpartikel auf Basis von bioabbaubaren, gesättigten Polyestern, hergestellt nach Anspruch 2.

12. Expandierte Polymerpartikel auf Basis von bioabbaubaren, gesättigten Polyestern, hergestellt nach Anspruch 1.

13. Expandierte Polymerpartikel auf Basis von bioabbaubaren, gesättigten Polyestern, hergestellt durch Verschäumen der Polymerpartikel nach Anspruch 10.

## Claims

1. A process for producing expanded polymer beads based on biodegradable saturated polyesters made from at least one diol and from at least one aliphatic and one aromatic dicarboxylic acid, and also, if desired, from other transesterification components, which comprises the following steps:
A. polymer pellets are dispersed in a liquid,
B. a volatile blowing agent is injected into the dispersion under pressure and made to impregnate the pellets at an elevated temperature,
C. the pressure of the dispersion is reduced at an elevated temperature, whereupon the pellets comprising blowing agent expand to give foam, and
D. the pellets are isolated from the liquid.

2. A process for producing expandable polymer beads based on biodegradable saturated polyesters made from at least one diol and from at least one aliphatic and one aromatic dicarboxylic acid, and also, if desired, from other transesterification components, which comprises the following steps:
A. polymer pellets are dispersed in a liquid,
B. a volatile blowing agent is injected into the dispersion under pressure and made to impregnate the pellets at an elevated temperature,
C. the pressure of the dispersion is reduced after the dispersion has been cooled to room temperature, whereupon the pellets comprising blowing agent do not expand to give foam, and
D. the pellets are isolated from the liquid.

3. A process as claimed in claim 1 or 2, wherein the polyester is a condensation product made from
a) an acid component made from
a1) from 30 to 70 mol% of at least one aliphatic or cycloaliphatic C₂-C₂₀ dicarboxylic acid or ester-forming derivatives of these and
a2) from 30 to 70 mol% of at least one aromatic dicarboxylic acid or ester-forming derivatives of these, and
b) a diol component from at least one C₂-C₁₂ alkanediol or from a C₅-C₁₀ cycloalkanediol,
and melts at from 70 to 150°C.

4. A process as claimed in claim 1 or 2, wherein the saturated polyesters may be blended with up to 200%, based on their weight, of other biodegradable polymers, preferably naturally occurring polymers.

5. A process as claimed in claim 1 or 2, wherein the polyester has been branched by incorporating three- or multifunctional components and/or has been chain-lengthened by incorporating diisocyanates and/or has been modified using a hydroxycarboxylic acid.

6. A process as claimed in claim 1 or 2, wherein the polymer pellets used have not been foamed and the density of the liquid is from 1.05 to 1.3 g/cm³.

7. A process as claimed in claim 5, wherein the liquid is ethylene glycol, glycerol or a mixture of these with water.

8. A process as claimed in claim 1 or 2, wherein the liquid is water and the pellets have been foamed to a small degree and their density is 1.0 g/cm³ or below.

9. A process as claimed in claim 1 or 2, wherein the volatile blowing agent is a C₃-C₈ hydrocarbon, ethanol, CO₂, NH₃, air, N₂ or mixtures of these.

10. A process as claimed in claim 1 or 2, wherein the impregnation in step B is carried out at pressure from 2 to 50 bar and at a temperature which is no more than 40°C below, and not more than 40°C above, the crystalline melting point (DSC maximum) of the polymer.

11. An expandable polymer bead material based on biodegradable saturated polyesters prepared as claimed in claim 2.

12. An expanded polymer bead material based on biodegradable saturated polyesters prepared as claimed in claim 1.

13. An expanded polymer bead material based on biodegradable saturated polyesters prepared by foaming the polymer beads as claimed in claim 10.

## Revendications

1. Procédé de production de particules de polymère expansées à base de polyesters saturés biodégradables provenant d'au moins un diol et d'au moins un acide dicarboxylique aliphatique et d'un acide dicarboxylique aromatique, ainsi qu'éventuellement d'autres composants d'estérification, **caractérisé par** les étapes de procédé suivantes:
A. le polymère granulé est dispersé dans un liquide,
B. on injecte sous pression un agent porogène volatil dans la dispersion et on en imprègne les granulés à température élevée,
C. la dispersion est détendue à température élevée, ce qui provoque l'expansion des granulés contenant l'agent porogène,
D. les granulés sont séparés du liquide.

2. Procédé de production de particules de polymère expansibles à base de polyesters saturés biodégradables provenant d'au moins un diol et d'au moins un acide dicarboxylique aliphatique et d'un acide dicarboxylique aromatique, ainsi qu'éventuellement d'autres composants d'estérification, **caractérisé par** les étapes de procédé suivantes:
A. le polymère granulé est dispersé dans un liquide,
B. on injecte sous pression un agent porogène volatil dans la dispersion et on en imprègne les granulés à température élevée,
C. la dispersion est refroidie à la température ambiante, puis détendue, ce qui ne provoque pas d'expansion des granulés contenant l'agent porogène,
D. les granulés sont séparés du liquide.

3. Procédé selon la revendication 1 ou 2, **caractérisé en ce que** le polyester est un produit de condensation de
a) un composant acide constitué de
a1) 30 à 70% molaires d'au moins un acide dicarboxylique aliphatique ou cycloaliphatique en C₂ à C₂₀ ou de ses dérivés estérogènes,
a2) 30 à 70% molaires d'au moins un acide dicarboxylique aromatique ou de ses dérivés estérogènes, et
b) un composant diol constitué d'au moins un alcanediol en C₂ à C₁₂ ou un cycloalcanediol en C₅ à C₁₀,
et qui fond dans la plage allant de 70 à 150°C.

4. Procédé selon la revendication 1 ou 2, **caractérisé en ce que** les polyesters saturés peuvent être mélangés avec jusqu'à 200% , par rapport à leur poids, d'autres polymères biodégradables, de préférence des polymères naturels.

5. Procédé selon la revendication 1 ou 2, **caractérisé en ce que** le polyester est ramifié par introduction de composants tri- ou polyfonctionnels et/ou soumis à un allongement de chaîne par introduction de diisocyanates et/ou modifié par un acide hydroxycarboxylique.

6. Procédé selon la revendication 1 ou 2, **caractérisé en ce que** le polymère granulé mis en oeuvre est non expansé et que le liquide présente une masse volumique de 1,05 à 1,3 g/cm³.

7. Procédé selon la revendication 5, **caractérisé en ce que** le liquide est de l'éthylèneglycol, du glycérol ou un mélange de ceux-ci avec de l'eau.

8. Procédé selon la revendication 1 ou 2, **caractérisé en ce que** le liquide est de l'eau et que les granulés sont légèrement expansés et présentent une masse volumique de 1,0 g/cm³ ou moins.

9. Procédé selon la revendication 1 ou 2, **caractérisé en ce que** l'agent porogène volatil est un hydrocarbure en C₃ à C₈, de l'éthanol, du CO₂, du NH₃, de l'air, du N₂ ou des mélanges de ceux-ci.

10. Procédé selon la revendication 1 ou 2, **caractérisé en ce que**, dans l'étape B, l'imprégnation est entreprise sous une pression de 2 à 50 bar et à une température qui est au maximum de 40°C inférieure et au maximum de 40°C supérieure au point de fusion des cristallites (maximum en DSC) du polymère.

11. Particules de polymère expansibles à base de polyesters saturés biodégradables, préparées selon la revendication 2.

12. Particules de polymère expansées, à base de polyesters saturés biodégradables, préparées selon la revendication 1.

13. Particules de polymère expansées, à base de polyesters saturés biodégradables, préparées par expansion des particules de polymère selon la revendication 10.
